(19) 

**Europäisches Patentamt**
**European Patent Office**
**Office européen des brevets**

(11) **EP 2 452 986 B1**

(12) **EUROPEAN PATENT SPECIFICATION**

(45) Date of publication and mention
of the grant of the patent:
**22.07.2015 Bulletin 2015/30**

(51) Int Cl.:
*C09D 5/00* *(2006.01)*      *C09D 7/12* *(2006.01)*
*C09D 5/33* *(2006.01)*      *C08K 7/22* *(2006.01)*
*C08L 25/04* *(2006.01)*

(21) Application number: **11187520.9**

(22) Date of filing: **02.11.2011**

(54) **Infrared reflective coating compositions**

Infrarot reflektierende Beschichtungszusammensetzungen

Compositions de revêtement réflectif à infrarouge

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.11.2010 CN 201010576133**

(43) Date of publication of application:
**16.05.2012 Bulletin 2012/20**

(73) Proprietors:
 • **Rohm and Haas Company**
 **Philadelphia, PA 19106-2399 (US)**
 • **Dow Global Technologies LLC**
 **Midland, MI 48674 (US)**

(72) Inventors:
 • **Huang, Qian**
 **Dongjing Road Shanghai 201208 (CN)**
 • **Rokowski, Joseph M.**
 **Barto, PA Pennsylvania 19504 (US)**

 • **Zhang, Yang**
 **D-40322 Dusseldorf (DE)**

(74) Representative: **Houghton, Mark Phillip et al**
**Patent Outsourcing Limited**
**1 King Street**
**Bakewell, Derbyshire DE45 1DZ (GB)**

(56) References cited:
**EP-A1- 2 182 033**      **WO-A1-2006/088351**
**WO-A1-2010/091416**      **WO-A2-2008/048765**
**DE-A1- 10 010 538**      **US-B1- 6 194 484**

 • **Anonymous: "ROPAQUE(TM) ULTRA-E,
OPAQUE POLYMER", , 23 August 2005
(2005-08-23), pages 1-7, XP55019254,
Philadelphia, USA Retrieved from the Internet:
URL:http://uzkimya.com/doc/Ropaque Ultra-
E.pdf [retrieved on 2012-02-13]**

EP 2 452 986 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

**Description**

<u>Background</u>

This invention relates generally to coating compositions with improved properties in infrared reflectance, dirt pick up resistance (DPUR), and tensile performance.

The increasing cost and scarcity of energy has led to a growing emphasis on the energy conservation of buildings. Development of infrared reflective and heat insulated coating would be one effective measure to minimize the heat transfer through the top down to the inside, and thus lower the demand for energy consumption.

One exploration focuses on material screening, especially on inorganic pigments, by measurement of reflectance in specific wavelength regions. And the reflective coating products contain the pigments, typically metal oxides, which selectively reflect radiation in special electromagnetic regions. There is still a need for improvement of the reflectance performance in the total solar radiation region (300-2,500nm), especially in the near infrared region (NIR, 700-2,500nnm) which is known as the main contribution to the heat buildup. Moreover, significant improvement in thermal insulation performance and durability properties, such as DPUR and scrub resistance, cannot be delivered without the improved reflectance property by selecting from specific pigments, especially for high PVC products.

DE patent publication 10010538A, to Hugo discloses coatings comprising a spectrally selective blend of flake and spherical pigments that absorb Infrared (IR) and (UV) radiation and reflect the highest energy solar radiation. US patent no. 6194484B, to Hugo, discloses infrared absorptive coatings that absorb heat (infrared) and visible light energy and comprise a blend of flake and spherical particles. The Hugo references do not disclose IR reflective coatings which are desirable for soft coatings and in hot climes. WIPO publication WO 2010/091416, to Valspar, discloses a custom paint tinting system that takes a darker tint base from any of a very large number of pigments and makes a lighter colored paint from it; some pigments are "non-infrared" absorbtive; however, the paints are not infrared reflective. EPO publication no. EP 2182033A, to Akzo, discloses a low energy consuming paint composition that is low in $TiO_2$ and has a pigment volume concentration or PVC of 75 to 90%; however, the Akzo coating composition has a low proportion of polymer binder and so would not be useful in exterior paint applications where supercritical paints are needed. WIPO publication no. WO 2008/048765A, to Millennium Inorganic Chemicals, discloses de-polluting coating compositions which are dirt pick up resistant but not infrared reflective.

Polymeric hollow microspheres have been used as an ideal replacement of inorganic pigments to solve the abovementioned problems. Chinese patent publication. CN101665658, to Peng Yi, provides a heat-reflective and thermal-radiating functioned coating which consists of a macromolecular film formative material, a heat-reflective and thermal-radiating material, and a polymeric hollow microsphere material in a dry weight ratio of, respectively, 40-70%, 30-60% and 0.2-10%. The polymeric hollow microsphere material is an emulsion resin of hollow microspheres with particle size of 0.1-5 $\mu$m or, 0.1-2 $\mu$m. However, the polymeric hollow microsphere emulsion resin is used in the reference as heat insulation material to replace glass hollow microspheres, ceramic hollow microbeads or cenospheres. The heat reflection property of the coating derives from heat-reflective and thermal-radiating material such as mica powder, sericite in powder, titanium dioxide, Kaolin, French chalk, alumina and infrared pigment. The polymeric hollow microspheres are not discovered to have effect on solar reflectance. Nor were the difference in their particle sizes found to have different reflective rates in different solar wavelengths, by references such as US20050126441, US6787585 and US20040137160 . Therefore, there is still a need for a novel coating composition containing specific polymeric hollow microspheres with certain particle size and residue composition to achieve an improved reflectance in infrared wavelength, durability in reflectance overtime (measured by DPUR) and tensile performances of the coating film formed, especially in roof coating applications.

Therefore, the problem addressed by the present invention is to overcome the defects of the abovementioned systems by providing infrared reflective coating compositions which imparts improved reflectance in infrared wavelength, DPUR and tensile properties of the coating film formed therefrom.

<u>Statement of Invention</u>

The present invention, in its various aspects, is as set out in the accompanying claims.

The first aspect of the present invention is directed to an infrared reflective coating composition comprising, by weight percentage based on the total dry weight of the composition, 0.1% to 50% polymeric hollow particles, from 0.1% to 70% pigment particles and from 20% to 80% of at least one polymeric binder having a Tg, measured by differential scanning calorimetry, from -60°C to 0°C, wherein the volume average particle size of the polymeric hollow particles is from 0.38 to 1.6$\mu$m; and wherein the volume average particle size distribution of the polymeric hollow particles is such that 90% of particle lies within $\pm$10% of the volume average particle size..

The second aspect of the present invention is directed to a coated material comprising at least one coating film derived from the coating composition.

The third aspect of the present invention is directed to an infrared reflective multilayer coating system derived from the coating composition of the first aspect of the present invention, wherein the coating composition is applied as a base coating, a top coating, or as both base coating and top coating of a multilayer coating system.

Detailed Description

For the purpose of describing the components in the compositions of this invention, all phrases comprising parenthesis denote either or both of the included parenthetical matter and its absence. For example, the phrase "(co)polymer" includes, in the alternative, polymer, copolymer and mixtures thereof; the phrase "(meth)acrylate" means acrylate, methacrylate, and mixtures thereof.

As used herein, the term "aqueous" shall mean water or water mixed with 50wt% or less, based on the weight of the mixture, of water-miscible solvent.

As used herein, the term "polymer" shall include resins and copolymers.

As used herein, the term "acrylic" shall mean (meth)acrylic acid, (meth)alkyl acrylate, (meth)acrylamide, (meth)acrylonitrile and modified forms thereof, such as, for example, (meth)hydroxyalkyl acrylate.

As used herein, the term "styrenic" refers to a monomer containing a molecular structure of, or a polymer containing a polymerized unit of styrene or any of its derivatives such as, for example, styrene, methyl styrene, vinyl toluene, methoxy styrene, butyl styrene, or chlorostyrene, or the like.

As used herein, the term "pigment" shall mean a particulate inorganic material which is capable of materially contributing to the opacity or hiding capability of a coating. Such materials typically have a refractive index of greater than 1.5 and include, for example, titanium dioxide, red iron oxide, yellow iron oxide, zirconium dioxide, zinc oxide, chromium trioxide, zinc sulfide, aluminum oxide, and the like.

As used herein, the term "extender" shall mean a particulate inorganic material having a refractive index of less than or equal to 1.5 and includes, for example, calcium carbonate, clay, calcium sulfate, aluminosilicates, silicates, zeolites, barium sulphate, magnesium silicate, kaolin, mica, amorphous silica, diatomaceous silica, diatomaceous earth and the like.

As used herein, the term "multilayer coating system" shall mean coating structure comprising at least two layers of coating film on surface of substrate.

As used herein, unless otherwise indicated, the term "average particle size (or diameter)" refers to the median particle size (or diameter) of a distribution of particles as determined by electrical impedance using a MULTISIZER™ 3 Coulter Counter (Beckman Coulter, Inc., Fullerton, CA), per manufacturer's recommended procedures. The median is defined as the size wherein 50wt% of the particles in the distribution are smaller than the median and 50wt%of the particles in the distribution are larger than the median. This is a volume average particle size.

As used herein, unless otherwise indicated, the term "Tg" shall mean glass transition temperature measured by differential scanning calorimetry (DSC) using a heating rate of 20°C/minute and taking the inflection point in the thermogram as the Tg value. The term "calculated Tg" refers to the Tg of polymers determined via the Fox equation (T.G. Fox, Bull. Am. Physics Soc., Volume 1, Issue No. 3, page 123(1956)). The Tgs of homopolymers may be found, for example, in "Polymer Handbook", edited by J. Brandrup and E.H. Immergut, Interscience Publishers. In the case of a multi-stage polymer, the reported Tg value shall be the weighted average of the observed inflection points in the thermogram. For example, a two stage polymer consisting of 80% soft first stage and 20% hard second stage polymer having two DSC inflection points, one at - 43°C and one at 68°C, will have a reported Tg of -20.8°C.

As used herein, the term "wt%" shall mean percent by weight.

As used herein, the term "up to" in a range shall mean any and all amounts greater than zero and through to and including the end point of the range.

As used herein the term DPUR means "dirt pick-up resistance" as defined in the Test Procedures Section.

All ranges recited are inclusive and combinable. For example, an average diameter of 1μm or more, or 2μm or more, or 4μm or more and up to 20μm, or up 15μm, will include ranges of 1μm or more to 20μm or less, 1μm or more to 15μm or less, 2μm or more to 15μm or less, 2μm or more to 20μm or less, 4μm or more to 15μm or less, and 4μm or more to 20μm or less.

In the present invention, the infrared reflective coating composition comprises, by weight percentage based on the total dry weight of the composition, 0.1% to 50%, preferably from 5% to 30%, more preferably from 5% to 25%, polymeric hollow particles containing at least one void per particle. The polymeric hollow particles herein refer to a film forming and non-film forming emulsion (co)polymer containing at least one void per (co)polymer particle; during the drying of the coating composition, the water in the void diffuses through the (co)polymer shell and leaves air voids in the coating film. Due to the difference in refractive index between air and the surrounding polymer, light is effectively scattered and thus may contributing to coating film optical characteristics such as opacity, substrate hiding and light reflection. By "void" herein is meant a hollow space filled with air or gas in a microsphere. Any space outside of the microsphere, regardless filled with air or gas or vacuum, is not included in the definition of said "void". The pigment particles or the extender particles of the present invention, which may have hollow space inside the particles or interspaces between the particles, are neither regarded as hollow particles nor in the category of material that has voids of the present invention. Examples of the polymeric hollow particles include the multistage polymers commercial available, such as, ROPAQUE™ Series products including Ultra E, HP-1055, AF-1353, HP-1670 and EXP-4454, available from DOW Chemical Company.

The volume average particle size of the polymeric hollow particles of the present invention shall be in the range of from 0.38 to 1.6μm, preferably from 0.38 to 1.3μm, and shall have a volume average particle size distribution (PSD) of 90% of particle being within ±10% of the volume average particle size. The coating composition containing the polymeric hollow particles around 0.38μm exhibits a higher solar reflectance in the visible wavelength region (400-700nm) than that of a coating composition in which the polymeric hollow particles are substituted by titanium dioxide in the same weight percentage. Similar solar reflectance improvement occurs in the infrared radiation region (700-2500nm) by using the polymeric hollow particles with an average particle size around 1.0μm to 1.3μm. The polymeric hollow particles with the average particle size of 1.0μm provide the highest total solar reflectance as well as near infrared reflectance, as compared with the other compositions containing 0.38μm, 1.3μm or 1.6μm particles. When the average particle size is larger than 1.6μm, the infrared reflectance of the coating composition is obviously lower than that of from 1.0μm to 1.3μm. A similar infrared reflectance decrease is apparently observed when the average particle size is smaller than 0.38μm.

Suitable polymeric hollow particles may include, for example, polymers chosen from single staged polymers, such as crosslinked t-butyl acrylate (t-BA) (co)polymer, crosslinked 2-ethylhexyl (meth)acrylate (co)polymer, crosslinked sec-butyl (meth)acrylate (co)polymer, crosslinked ethyl (meth)acrylate (co)polymer, crosslinked methyl acrylate (co)polymer, crosslinked hexyl (meth)acrylate (co)polymer, crosslinked isobutyl (meth)acrylate (co)polymer, crosslinked benzyl (meth)acrylate (co)polymer, crosslinked isopropyl (meth)acrylate (co)polymer, crosslinked decyl (meth)acrylate (co)polymer, crosslinked dodecyl (meth)acrylate (co)polymer, crosslinked n-butyl (meth)acrylate (co)polymer, crosslinked C21 to C30 alkyl (meth)acrylates, crosslinked vinyl propionate (co)polymer, urethane polymer, melamine polymer, silicone-functional (meth)acrylate copolymer, a copolymer of any of the crosslinked polymers with an acrylic monomer the copolymer having a Tg of from -10°C to 75°C, a copolymer of any of the crosslinked polymers with a vinyl monomer the copolymer having a Tg of from -10°C to 75°C; multi-stage polymers, such as acrylic multi-stage polymer, vinyl multi-stage polymer, multi-stage synthetic rubber copolymer, multi-stage urethane copolymer, water-dispersible graft copolymer, mixtures and combinations thereof, such as poly(urethane acrylate). Preferably, the polymeric hollow particles contain, as (co)polymerized unit, at least 50wt% styrenic monomer, alternatively at least 70wt% styrenic monomer, and alternatively at least 85wt% styrenic monomer. Preferably, the polymeric hollow particles comprise single stage crosslinked (co)polymers which are the polymerization product of more than 50 wt% of monomers which would yield a homopolymer film having a Tg of from -10°C to 75°C. More preferably, the polymeric hollow particles comprise multi-stage polymers.

In one preferable embodiment of the present invention, the polymeric hollow particles comprise multi-stage (co)polymers with, for example, a core-shell or layered structure, such as a multilobal structure. The multi-stage duller particles comprise a polymeric core phase and one or more polymeric shell phases, or, preferably comprise a graded refractive index (grin) composition formed as shown in US patent publication no. 20070218291 to Chiou et al.. The core may be prepared from a variety of vinyl monomers, and may be a rubbery or glassy polymer. The core may be prepared from polymerization or copolymerization of such monomers as diolefins, e.g. butadiene or isoprene; vinyl aromatic monomers, e.g. styrene or chlorostyrene; vinyl esters, e.g. vinyl acetate or vinyl benzoate; acrylonitrile; methacrylonitrile; (meth)acrylate esters, e.g. methyl methacrylate, butyl methacrylate, phenyl methacrylate, ethyl acrylate, butyl acrylate, 2-ethylhexyl acrylate, and benzyl acrylate; vinyl chloride; and other monomers polymerizable by free-radical initiation.

The polymeric hollow particles shall have a volume average particle size of from 0.38 to 1.6μm, and preferably, containing at least 50wt% styrenic residues. When a hollow styrenic (co)polymer having an average diameter of smaller than 0.3μm is to be made and used, then the contribution to improved reflectance, hiding and opacity in the visible wavelength region is significantly reduced. Alternately, hollow styrenic copolymers having an average particle size larger than 1.6μm have thin outer shells which prone to collapse. Therefore, it is excluded from present invention if the average particle size of the hollow styrenic (co)polymer is either smaller than 0.38 μm or larger than 1.6μm. In other words, when the coating composition of the present invention contains hollow styrenic (co)polymer as the mere functional component belonging to the polymeric hollow particle category, the average particle size shall be within the range of 0.38 μm to 1.6μm, which affords the comprehensive and balanced properties of solar reflectance especially in the near infrared region, durability in reflectance/DPUR and tensile performance.

The coating composition of the present invention comprises, by weight percentage based on the total dry weight of the composition, from 0.1% to 70% preferably from 0.1% to 30%, more preferably from 5% to 25%, even more preferably from 5% to 20%, of pigment particles. The pigment particles shall have an average refractive index of 1.43 to 2.81, preferably from 1.64 to 2.81, more preferably from 1.75 to 2.81 which are also known as opacifiers. The weight average particle size of the pigment particles may ranges from 50 to 2000nm, preferably from 50 to 1000nm, more preferably from 100 to 1000nm, tunable based on the application. For example, in one embodiment of a roof coating composition, the average thickness of the pigment particles surrounding or covering the polymeric hollow particles is in the range of 0.1-10μm. Therefore, the average particle size of the pigment particle may be no larger than 1000nm, suitable in the range of 50 to 300nm, especially from 50 to 100nm. The effect of pigment particle size on the light and UV scattering is known. For example, it indicates that commercial titanium dioxide pigments are manufactured with an average particle size of around 200nm. While the optimum value for scattering visible radiation with a peak intensity of 500nm. Therefore, larger particle sizes are required to scatter the longer wavelengths of solar/infrared radiation, for example, 1μm particles of titanium dioxide would effectively scatter near-infrared radiation at 2.3μm. The pigment particle size of the present invention can be deduced based on such physical principles.

Suitable pigment materials of the present invention include titanium dioxide, zinc oxide, zinc sulfide, Kaolin, aluminum oxide and their mixtures thereof. Preferable pigment is titanium dioxide which has a highest refractive index of 2.8 among the pigments in the art, including commercial products such as, for example, TRONOX™ CR 828 (190nm particle size) produced by Tronox Company, TI-PURE™ R-706 (360nm particle size) and TI-PURE™ R-902⁺ (420nm particle size) available from DuPont Company, R-820 (260nm particle size), R830 (250nm particle size) from ISK Company, and Tioxide™ TR88 (260nm particle size), Tioixde™ TR92 (240nm particle size) from Huntsman Company.

The coating composition may optionally comprise extender particles such as, for example, calcium carbonate, clay, calcium sulfate, aluminosilicates, silicates, zeolites, and diatomaceous earth. The content of the extender may be up to 50wt%, preferably up to 40wt%, more preferably up to 35wt%, based on the total dry weight of the coating composition.

The coating composition of the present invention comprises, by weight percentage based on the total dry weight of the composition, from 20% to 80%, preferably from 25% to 75%, more preferably from 20% to 70%, at least one polymeric binder. The polymeric binder may comprise aqueous emulsion (co)polymers or aqueous emulsions, i.e. oil-in-water, of preformed (co)polymers chosen from acrylics, vinyls, such as vinyl acetate or vinyl acetate-ethylene, polyurethanes, polystyrenes, epoxies, polyolefins, polyesters, polyamides, siloxanes, natural rubbers, synthetic rubber polymers, such as styrene-butadiene (SBR) block copolymers, and mixtures and combinations thereof. Preferably, the binder (co)polymer is acrylic.

The polymeric binder has a measured Tg of from -60°C to 0°C. The use of polymeric binders with low Tg, i.e. from -60°C to 0°C, or from -60°C to -20°C, or from -60°C to -40°C, enhances the solar reflectance (in the radiation wavelength region of 300-2500nm) of the coating composition comprising the polymeric hollow particles. In such embodiment, when a coating composition such as, for example, a elastomeric coating, contains the polymeric binder having a Tg lower than -20°C, not only the solar reflectance can be obviously improved by incorporating said polymeric hollow particles, but also the DPUR and the long term durability (i.e. the ability to retain a high level of solar reflectance over time) can be greatly improved.

The polymeric binder of the present invention may comprise one or more aqueous emulsion (co)polymers.

The polymerization techniques used to prepare the (co)polymers of the present invention are well known in the art, for example, aqueous emulsion polymerization, as disclosed in US 20030236374.

The aqueous emulsion (co)polymers may be prepared by a multistage emulsion polymerization process, in which at least two stages differing in composition are polymerized in sequential fashion. Such a process may result in the formation of at least two mutually incompatible polymer compositions, thereby resulting in the formation of at least two phases within the polymer particles. Such particles are composed of two or more phases of various geometries or morphologies such as, for example, core/shell or core/sheath particles, core/shell particles with shell phases incompletely encapsulating the core, core/shell particles with a multiplicity of cores, and interpenetrating network particles. In all of these cases the majority of the surface area of the particle will be occupied by at least one outer phase and the interior of the particle will be occupied by at least one inner phase. Each stage of the multi-staged emulsion (co)polymer may contain the same monomers, surfactants, chain transfer agents, etc. as disclosed herein-above for the emulsion polymer. The core of the (co)polymer particle may be hollow (i.e., air void). The polymerization techniques used to prepare such multistage emulsion polymers are well known in the art such as, for example, US Patents No. 4,325,856; 4,654,397; and 4,814,373.

The coating composition may contain conventional coatings adjuvants such as, for example, tackifiers, emulsifiers, coalescing agents such as for example, TEXANOL™ (Eastman Chemical Co.), cosolvents such as, for example, glycols and glycol ethers, buffers, neutralizers, thickeners or rheology modifiers, humectants, wetting agents, biocides, plasticizers, antifoaming agents, colorants, waxes, antifreeze, and anti-oxidants.

The coating composition is contemplated to encompass architectural coatings, industrial coatings or paint compositions which may be described in the art as low gloss or flat coatings, primers, textured coatings, and the like.

The coating composition is prepared by techniques which are well known in the coatings art. First, optionally, at least one pigment is well dispersed in an aqueous medium under high shear such as is afforded by a Cowles mixer or, in an alternative, at least one predispersed pigment may be used. Then the polymeric binder is added under low shear stirring along with other coatings adjuvants, as desired. Alternatively, the polymeric binder may be included in the optional pigment dispersion step.

The solids content of the coating composition may be from about 10% to about 70% by volume. The viscosity of the coating composition may be from 0.05 to 40 Pa.s (50 cps to 40,000 cps), as measured using a Brookfield viscometer; the viscosities appropriate for different application methods vary considerably.

The coating composition may be applied by conventional application methods such as, for example, brushing, roller application, and spraying methods such as, for example, air-atomized spray, air-assisted spray, airless spray, high volume low pressure spray, and air-assisted airless spray. In factory applied environments the coating composition may be applied by any suitable method, including roll coater, curtain coater and the like.

The present invention also provides a coated material comprising at least one coating film derived from the coating composition. The coating composition may be applied to a material as substrate such as, for example, plastic, wood, metal, fabrics, paper, primed surfaces, spray PU foam, previously painted surfaces, asphalt, rubber, thermoplastic polyolefin (TPO) and cementitious substrates in architecture or other industries including automotive, train, airplane, spacecraft, ship, oil tank, pipe. In architectural applications, the coating composition is suitable for coating of an exterior surface including roof, wall and glazing. The coating composition coated on the substrate is typically dried, or allowed to dry, at a temperature of from 1 °C to 95 °C.

The coating film derived from the coating composition may contain a great many voids which are generated due to the discontinuous and disconnection of the solid phase inside the film and outside of the polymeric hollow particles. However, such voids may also contribute to the infrared reflectance and insulation properties despite their generating mechanism and mechanical parameters could be different from that of the voids inside the polymeric hollow particles.

An infrared reflective multilayer coating system derived from the coating composition is also provided by the present invention. The coating composition is applied as a layer of top coating covering a pre-coated surface, as a layer of base coating covered by other pigmented or clear top coating, or as both base coating and top coating of a multilayer coating system.

As a whole, the present invention provides a simple and cost effective infrared reflective coating composition which can solve the problem of a tradeoff between solar reflectance, DPUR, and tensile performance. A significant improvement of solar reflectance is demonstrated in the coating composition not only in the total solar radiation region but also in NIR reflectance, as compared to conventional coating systems without the polymeric hollow particles or with glass hollow microspheres. The coating composition also achieves higher levels of DPUR than the conventional coating systems by measuring the loss percentage in solar reflectance in total solar region and in NIR after a DPUR test, especially in low Tg (for example, around -40°C) binder formulations. It is also unexpected that said polymeric hollow particles tremendously improve tensile performance of the conventional coating systems without sacrifice its elongation performance.

In the present specification, the technical features in each preferred technical solution and more preferred technical solution can be combined with each other to form new technical solutions unless indicated otherwise. For briefness, the Applicant omits the descriptions for these combinations. However, all the technical solutions obtained by combing these technical features should be deemed as being literally described in the present specification in an explicit manner.

Examples

I. Raw Materials

Table 1 Raw materials

| Material | Function | Chemical nature | Supplier |
|---|---|---|---|
| Tronox CR 828 | Pigment | titanium dioxide (particle size 190nm) | Tronox Inc. |
| Ti-Pure™ R-706 | Pigment | titanium dioxide (particle size 360nm) | DuPont |
| Ti-Pure® R-902+ | Pigment | titanium dioxide (particle size 420nm) | DuPont |
| ROPAQUE™ Ultra E | Functional filler | polystyrenic (>85% styrene) hollow microsphere, particle size 340-550nm, 90% of particle lies within ±10% of the volume average particle size (380nm) | Dow Chemical |

(continued)

| Material | Function | Chemical nature | Supplier |
|---|---|---|---|
| ROPAQUE™ HP-1055 | Functional filler | polystyrenic (>85% styrene) hollow microsphere (particle size 900-1200nm, 90% of particle lies within ±10% of the volume average particle size (1000nm) | Dow Chemical |
| ROPAQUE™ AF-1353 | Functional filler | polystyrenic (>85% styrene) hollow microsphere (particle size 1100-1400nm, 90% of particle lies within ±10% of the volume average particle size (1300nm) | Dow Chemical |
| ROPAQUE™ HP-1670 or EXP-4454 | Functional filler | polystyrenic (>70% styrene) hollow microsphere (particle size 1500-1700nm, 90% of particle lies within ±10% of the volume average particle size (1600nm) | Dow Chemical |
| VS5500 | Functional filler | glass bubbles (40-50$\mu$m particle size, 0.127Wm$^{-1}$K$^{-1}$ thermal conductivity) | 3M Company |
| Emulsion A | Binder | Acrylate/acrylate polymer (85 BA/12.35 MMA/1.65 MAA/1 Adhesion Monomer*) dispersed in water, 55 Solid%, 0.3-0.4$\mu$m particle size, and -40°C for Tg | Dow Chemical |
| Emulsion B | Binder | Acrylate/acrylate polymer (90.6 BA/ 7 AN/ 1.4 AA /1 Adhesion Monomer*) dispersed in water, 55 Solid%, 0.3-0.4$\mu$m particle size, and -40°C for Tg | Dow Chemical |
| Emulsion C | Binder | Acrylate/acrylate polymer (45.6 BA/52.4 MMA/1 MAA/1 Adhesion monomer*) dispersed in water, 50 Solid%, 0.16$\mu$m particle size, 16°C for MFFT, and 24°C for Tg | Dow Chemical |
| Dispex A-40 | Dispersant | Narrow-fraction acrylic dispersant for inorganic pigments | BASF |
| Triton CF-10 | Wetting agent | Non-ionic-surfactant | Dow Chemical |
| Bevaloid 681F | Defoamer | Non-silicone, mineral oil based defoamer | Rhodia |
| Arysol RM-2020NPR | Thickener | Solvent-free, hydrophobically modified non-ionic rheology modifier | Dow Chemical |
| Acrysol TT-615/H$_2$O (1:5) | Thickener | Hydrophobically modified anionic thickener (solid content: 30%) | Dow Chemical |
| Texanol (10% of Polymer solids) | film-forming auxiliary | Ester alchohol (2,2,4-Trimethyl-1,3-pentanediol Monoisobutyrate) | Eastman |
| * Adhesion monomer used herein is ureido ethyl methacrylate. | | | |

II. Test Procedures

Solar reflectance test: ASTM E903-96 Standard Test Method for Solar Absorptance, Reflectance, and Transmittance of Materials Using Integrating Spheres (1996, discontinued 2005). Alternately, ASTM Test Method C-1549 Determination of Solar Reflectance Near Ambient Temperature Using a Portable Solar Reflectometer (2009)

Standard DPUR test: the standard procedure for testing was based on the China National Standard GB Method GB/T 9780 (August 2005) as following steps:

1) Measure three points of reflectance and average. Record initial reflectance (R). Reflectance after DPUR testing is measured respectively by 1) reflectometer (400-700nm) according to GB/T 9780 method; and 2) UV-VIS-NIR Spectrophotometer with an integrating sphere (300-2500nm) as a developed method;

2) Using a 50/50 mixture of coal ash and water apply 0.7g of material evenly over the panel;

3) Allow panel to dry for 2 hours at 25°C (77°F) /55% r.h.;

4) Place the panel on the wash off apparatus. Using a water pressure of 5 psi, apply the water over the panel for 1 minute;

5) Allow the panel to dry for 24 hours at 25°C (77°F) /55% r.h. This completes 1 cycle;

6) Conduct a total of 5 cycles;

7) Measure the reflectance (final) again in three places on the panel. Record final reflectance (R'); and

8) Calculate the percent loss in reflectance using the following equation:

$$\text{Loss in reflectance (\%)}^* = (1\text{-}R/R') \times 100\%$$

* In the DPUR test, reflectance in the visible region was measured by a reflectometer (400-700nm) according to GB/T 9780 method. In order to evaluate the DPUR in other solar regions, a UV-VIS-NIR Spectrophotometer with an integrating sphere (300-2500nm) were used in a developed method to test the loss in reflectance in the total solar region, UV region and NIR region.

Tensile Performance testing: ASTM D 2370 Test Method for Tensile Properties of Organic Coatings (December 1998)

Surface Temperature and Thermal Insulation test: the standard procedure for testing thermal insulation is based on the China National Standard "Architectural reflective thermal insulation coatings" (JG/T 235-2008). The temperature increase at the center point of a XPS box is recorded for the panel which is one side of the box near the heat lamp, with or without coating respectively. The thermal insulation effect is calculated by:

$$\text{Thermal Insulation Temperature Difference} = \Delta T_{\text{no coating}} - \Delta T_{\text{with coating}}$$

The inventors further developed a method to measure surface temperature based on above China National Standard JG/T 235-2008. The only modification is that, during the radiation of heat lamp, a temperature sensor is fixed on the surface of a panel which is one side of the box near the heat lamp to record the temperature for the surface with or without coating.

III. Examples

Example 1-16

Formulation of the examples: The paint "mill base" was manufactured from the ingredients given in Table 2 using a high-speed disperser running at about 400 rpm for 30min. After cooling down of high speed mixing, the "mill base" was stored tightly. Coatings were then made up from the "mill base" by adding the ingredients in "let down" of Table 2. The mixing of the ingredients was accomplished by using mixing paddles at low speed. After manufacture, all the paints were stored at room temperature.

Table 2 Formulation of coating composition

| Formulation | | | wt% |
|---|---|---|---|
| MILL BASE | Solvent | Water | 6.6 |
| | Pigment Dispersant | Dispex A-40 | 0.3 |
| | Surfactant | Triton CF-10 | 0.2 |
| | Defoamer | Bevaloid 681F | 0.2 |
| | Thickener | Arysol RM-2020NPR | 2.2 |
| | pH adjustor | Ammonium Hydroxide (25%) | 0.23 |
| | Pigment | Titanium dioxide | 7.5 |

(continued)

| Stirring 0.5H | | | | |
|---|---|---|---|---|
| LET DOWN | Filler | ROPAQUE™ Ultra E, HP-1055, AF-1353 or EXP-4454 | 7.5 |
| | Defoamer | Bevaloid 681F | 0.2 |
| | Thickener | Acrysol TT-615/H$_2$O(1:5) | 3.3 |
| | pH adjustor | Ammonia (25%) | 0.48 |
| | Film-Forming Auxiliary | Texanol (10% of Polymer solids) | 1.84 |
| | Antifreeze | Propylene Glycol | 1 |
| | Polymer Dispersion (Binder) | Emulsion A, B or C; | 40 |
| | Solvent | Water | 8.255 |
| Total (wt%) | | | 100 |

For the formulations in Table 2, the details on the key components - binder, filler (ROPAQUE™), and pigment (TiO$_2$) for each example were respectively listed in Table 3. Other components such as additives are the same as Table 2.

Table 3 Key components for Examples 6-8, 11-13 and 16 and Comparative Examples 1-5 9,10, 14 and 15

| Exp No. | Binder (wt %) | | | Pigment & Filler | | | |
|---|---|---|---|---|---|---|---|
| | Emulsion C | Emulsion A | Emulsion B | TiO$_2$ (wt%) | Microspheres* | Microspheres amount(wt%) | PVC (%) |
| | Tg=24°C | Tg=-40°C | | | | | |
| 1 | 40 | 0 | 0 | 7.5 | Ultra E | 7.5 | 43 |
| 2 | 40 | 0 | 0 | 7.5 | HP-1055 | 7.5 | 47 |
| 3 | 40 | 0 | 0 | 7.5 | AF-1353 | 7.5 | 50 |
| 4 | 40 | 0 | 0 | 15 | 0 | 0 | 16 |
| 5 | 40 | 0 | 0 | 7.5 | VS5500 | 7.5 | 53 |
| 6 | 0 | 40 | 0 | 7.5 | Ultra E | 7.5 | 40 |
| 7 | 0 | 40 | 0 | 7.5 | HP-1055 | 7.5 | 44 |
| 8 | 0 | 40 | 0 | 7.5 | AF-1353 | 7.5 | 46 |
| 9 | 0 | 40 | 0 | 15 | 0 | 0 | 15 |
| 10 | 0 | 40 | 0 | 7.5 | VS5500 | 7.5 | 51 |
| 11 | 0 | 0 | 40 | 7.5 | Ultra E | 7.5 | 40 |
| 12 | 0 | 0 | 40 | 7.5 | HP-1055 | 7.5 | 44 |
| 13 | 0 | 0 | 40 | 7.5 | AF-1353 | 7.5 | 46 |
| 14 | 0 | 0 | 40 | 15 | 0 | 0 | 15 |
| 15 | 0 | 0 | 40 | 7.5 | VS5500 | 7.5 | 51 |
| 16 | 0 | 40 | 0 | 7.5 | EXP-4454 | 7.5 | 48 |

* Ultra E, HP-1055, AF-1353 and EXP-4454 are ROPAQUE™ series polymeric hollow particles available from Dow Chemical Company; and VS5500 is glass microspheres available from3M Company

IV. Test Results

1. Solar Reflectance

Table 4 Solar Reflectance for Examples and Comparative Examples

| Exp No. | Solar Reflectance % | | | |
|---|---|---|---|---|
| | Total Solar | UV | Visible | Near Infrared |
| 1 | 77.14 | 15.94 | 96.37 | 77.33 |
| 2 | 78.57 | 12.99 | 93.45 | 79.74 |
| 3 | 77.08 | 12.26 | 92.18 | 78.16 |
| 4 | 73.56 | 11.02 | 96.22 | 73.25 |
| 5 | 75.21 | 9.424 | 88.44 | 76.66 |
| 6 | 76.6 | 16.52 | 96.06 | 76.69 |
| 7 | 79.53 | 12.93 | 92.84 | 81.01 |
| 8 | 77.28 | 12.28 | 91.91 | 78.45 |
| 9 | 76.29 | 8.954 | 94.02 | 77.07 |
| 10 | 72.95 | 9.442 | 86.29 | 74.25 |
| 11 | 75.79 | 16.32 | 95.73 | 75.77 |
| 12 | 80.12 | 12.88 | 93.19 | 81.68 |
| 13 | 77.53 | 12.23 | 91.82 | 78.78 |
| 14 | 75.48 | 8.631 | 92.90 | 76.29 |
| 15 | 73.00 | 9.285 | 86.11 | 74.35 |
| 16 | 67.55 | 11.49 | 88.53 | 67.16 |

The results in Table 4 showed that the examples using polymeric hollow particles had higher solar reflectance than the Comparative Examples 5, 10 and 15 which use glass hollow microspheres.

For the examples that using high Tg (24°C) binder Emulsion C in Table 4, Examples 1-3 showed higher total solar reflectance (77.1%-78.6%) than the Comparative Example 4 (73.6%). It indicated that the total solar reflectance was significantly increased by introducing polymeric hollow particles such as, ROPAQUE™ Ultra E in Example 1, ROPAQUE™ HP-1055 in Example 2, and ROPAQUE™ AF-1353 in Example 3.

Moreover, all the Examples 1-3 provided higher total solar reflectance than Comparative Example 5 with glass hollow microspheres. It revealed that the polymeric hollow particles had more significant effect on solar reflectance than the glass hollow microspheres system.

Similar results were obtained in the other two binder systems containing low Tg binders Emulsion A and Emulsion B.

Regarding the effect of the different average particle sizes of the polymeric hollow particles on the solar reflectance performance, the particles having 1.0μm size contributed higher solar reflectance, especially in near infrared region than the 0.38μm, 1.3μm and 1.6μm particles. ROPAQUE™ Ultra E with the average particle size of 0.38μm (Examples 1, 6 and 11) mostly contributed to the increase of reflectance in the visible wavelength region (400-700 nm); ROPAQUE™ HP-1055 with the average particle size of 1.0μm (Examples 2, 7 and 12); ROPAQUE™ AF-1353 with the average particle size of 1.3μm (Example 3, 8 and 13) mostly contributed to the increase of reflectance in the near infrared radiation region (700-2500 nm); and ROPAQUE™ EXP-4454 (HP-1670) with the average particle size of 1.6μm (Example 16) has the least reflectance in visible (400-700nm) and near infrared region (700-2500nm). ROPAQUE™ HP-1055 with the average particle size of 1.0μm (Example 2, 7 and 12) provided the highest total solar reflectance as well as near infrared reflectance than the other three particles ROPAQUE™ Ultra E, ROPAQUE™ AF-1353 and ROPAQUE™ EXP-4454 (HP-1670).

The solar reflectance improvement brought about by the polymeric hollow particles was observed more significantly in the coating compositions which contain low Tg (e.g. -40°C) polymeric binders, as shown in Example 6-8, and 11-13 (compared with Example 1-3 containing high Tg binder) in Table 4. For example, for the same ROPAQUE™ HP-1055 based coatings, it showed higher reflectance property in Emulsion A and B resin systems (81.0%-81.7% for Examples 7 and 12) than in Emulsion C resin system (79.7% for Example 2). It indicated that the resins with lower Tg such as Emulsion A and Emulsion B (Tg=-40°C) have stronger interaction with polymeric hollow particles such as ROPAQUE™ HP-1055 than resin Emulsion C Tg = 24 °C, which lead to the improvement of solar reflectance property. On the other hand, the comparative examples with the same inorganic hollow microsphere (e.g. Examples 4, 9, and 14) did not show similar phenomenon. Instead, the reflectance even decreased from 76.7% to 74.3% with lowering the Tg of resin from 24°C to -40°C in the inorganic hollow microsphere based coatings. It suggested that the resins with low Tg (e.g. -40°C) enhanced the solar reflectance of a formulated coating with polymeric hollow particles by strong interaction with polymeric hollow particles such as ROPAQUE™ HP-1055.

Example 17- 19

In addition, the present invention was tested to compare the reflectance property of an organic hollow microsphere & $TiO_2$ coating system with the organic hollow microsphere only or $TiO_2$ only coating system. In each coating system, the total inorganic loading was kept equal (15 wt%).
The examples with equal total inorganic loading were listed in Table 5. The corresponding solar reflectance was listed in Table 6.

Table 5 Inorganic components for examples with equal total inorganic loading (wt %) in Emulsion A resin based coating compositions

| Example No. | $TiO_2$ | Ultra E | HP-1055 | AF-1353 |
|---|---|---|---|---|
| Example 6 | 7.5 | 7.5 | 0 | 0 |
| Comparative Example 17 * | 0 | 15 | 0 | 0 |
| Example 7 | 7.5 | 0 | 7.5 | 0 |
| Comparative Example 18 * | 0 | 0 | 15 | 0 |
| Example 8 | 7.5 | 0 | 0 | 7.5 |
| Comparative Example 19 * | 0 | 0 | 0 | 15 |
| Comparative Example 9 | 15 | 0 | 0 | 0 |
| * For the Comparative Examples 17-19, the other ingredients (such as Emulsion A and additives) were the same as those of Example 6-8 (refer to Table 2). | | | | |

Table 6 Solar reflectance of the examples in Table 5

| Example No. | Solar Reflectance % | | | |
|---|---|---|---|---|
| | Total Solar | UV | Visible | Near Infrared |
| Example 6 | 76.60 | 16.52 | 96.06 | 76.69 |
| Comparative Example 17 | 62.58 | 90.92 | 93.40 | 55.87 |
| Example 7 | 79.53 | 12.93 | 92.84 | 81.01 |
| Comparative Example 18 | 71.85 | 71.56 | 78.01 | 70.84 |
| Example 8 | 77.28 | 12.28 | 91.91 | 78.45 |
| Comparative Example 19 | 69.21 | 71.82 | 74.07 | 68.26 |
| Comparative Example 9 | 76.29 | 8.954 | 94.02 | 77.07 |

The results in Table 6 showed that the Examples 6-8 (polymeric hollow particles + $TiO_2$) achieved higher total solar reflectance than the corresponding Comparative Examples 17-19 (only containing polymeric hollow particles) and Comparative Example 9 (only containing $TiO_2$). It indicated that the combination of the polymeric hollow particles and $TiO_2$ performed better for solar reflectance especially in infrared region, as compared with either merely $TiO_2$ alone or merely polymeric hollow particles alone in same total amount.

Example 20-34

The present invention also designed multilayer coatings, Example 20-34, to investigate the effect of combination/assembly mode (different material with different refractive indices) on the reflectance property. The experimental results were shown in Table 7. In each tables (a)-(c), it indicated that the Examples 6-8 (organic hollow microsphere in combination with $TiO_2$ in both top and base coating) provided the higher solar reflectance especially for near infrared reflectance than its corresponding multilayer coatings (only organic hollow microsphere in top coating and only $TiO_2$ in base coating layers or in reverse order). It confirmed that the combination of $TiO_2$ and organic hollow microsphere achieved a superior reflectance property.

Table 7 Solar reflectance of (Emulsion A resin based) multilayer coatings*

| (a) Ultra E (0.38μm) as polymeric hollow particles | Multilayer Coatings | | Solar Reflectance % | | | |
|---|---|---|---|---|---|---|
| | Top layer: Example | Base layer: Example | Total Solar | UV | Visible | Near Infrared |
| Comparative Example 20 | 17 | 9 | 70.19 | 84.97 | 93.99 | 65.40 |
| Comparative Example 21 | 9 | 17 | 69.52 | 8.819 | 91.47 | 69.23 |
| Example 22 | 6 | 6 | 76.60 | 16.52 | 96.06 | 76.69 |
| Comparative Example 23 | 17 | 17 | 62.58 | 90.92 | 93.40 | 55.87 |
| Comparative Example 24 | 9 | 9 | 76.29 | 8.954 | 94.02 | 77.07 |

| (b) HP-1055 (1.0μm) as polymeric hollow particles | Multilayer Coatings | | Solar Reflectance % | | | |
|---|---|---|---|---|---|---|
| | Top layer: Example | Base layer: Example | Total Solar | UV | Visible | Near Infrared |
| Comparative Example 25 | 18 | 9 | 74.46 | 61.35 | 88.87 | 72.79 |
| Comparative Example 26 | 9 | 18 | 71.36 | 8.735 | 87.64 | 72.12 |
| Example 27 | 7 | 7 | 79.53 | 12.93 | 92.84 | 81.01 |
| Comparative Example 28 | 18 | 18 | 71.85 | 71.56 | 78.01 | 70.84 |
| Comparative Example 29 | 9 | 9 | 76.29 | 8.954 | 94.02 | 77.07 |

| (c) AF-1353 (1.3μm) as polymeric hollow particles | Multilayer Coatings | | Solar Reflectance % | | | |
|---|---|---|---|---|---|---|
| | Top layer: Example | Base layer: Example | Total Solar | UV | Visible | Near Infrared |
| Comparative Example 30 | 19 | 9 | 73.97 | 58.72 | 89.09 | 72.30 |
| Comparative Example 31 | 9 | 19 | 71.03 | 8.962 | 87.49 | 71.73 |
| Example 32 | 8 | 8 | 77.28 | 12.28 | 91.91 | 78.45 |
| Comparative Example 33 | 19 | 19 | 69.21 | 71.82 | 74.07 | 68.26 |
| Comparative Example 34 | 9 | 9 | 76.29 | 8.954 | 94.02 | 77.07 |
| * Thickness of each coating layer (top or base) was 120 μm (wet coating) | | | | | | |

2. Surface Temperature and Thermal Insulation Property

In order to better determine the practical benefit from infrared reflective coating, the surface temperature and thermal insulation temperature difference were respectively measured. The detailed results were shown in Table 8 and 9.

Table 8 Thermal insulation for Examples 6-8 and Comparative Example 9

| Example No. | TiO$_2$ wt% | Ultra E (0.38μm) wt% | HP-1055 (1.0μm) wt% | AF-1353 (1.3μm) wt% | Insulation temperature change * $\Delta T = T_e - T_o$ | Thermal insulation temperature difference ** $\Delta T_{\text{no coating}} - \Delta T_{\text{with coating}}$ |
|---|---|---|---|---|---|---|
| Example 6 | 7.5 | 7.5 | 0 | 0 | 14.9 | 15.2 |
| Example 7 | 7.5 | 0 | 7.5 | 0 | 14.3 | 15.8 |
| Example 8 | 7.5 | 0 | 0 | 7.5 | 15.2 | 14.9 |
| Comparative Example 9 | 15 | 0 | 0 | 0 | 15.4 | 14.7 |
| Blank Panel | Panel without coating | | | | 30.1 | - |
| * $T_o$ is the initial temperature inside of the box before heat lamp radiation; $T_e$ is the temperature inside of the box after heat lamp radiation (for more than 2 hours). $\Delta T$ is the temperature change from $T_e$ to $T_o$.<br>** Thermal insulation temperature difference is to compare $\Delta T$ no coating (temperature change for the panel without coating) with $\Delta T$ with coating (temperature change for the panel with coating examples). | | | | | | |

Table 9 Surface temperature for Examples 6-8 and Comparative Example 9

| Example No. | TiO$_2$ wt% | Polymeric Hollow Particles wt% | Surface Temp. T'$_e$ e | Surface Temp. T'$_o$ | Surface temperature change * $\Delta T' = T'_e - T'_o$ |
|---|---|---|---|---|---|
| Example 6 | 7.5 | 7.5 Ultra E (0.38μm) | 46.0 | 20.9 | 25.1 |
| Example 7 | 7.5 | 7.5 HP-1055 (1.0μm) | 44.5 | 20.6 | 23.9 |
| Example 8 | 7.5 | 7.5 AF-1353 (1.3μm) | 47.1 | 20.8 | 26.3 |
| Comparative Example 9 | 15 | 0 | 51.5 | 20.7 | 30.8 |
| Blank Panel | Panel without coating | | 61.5 | 20.4 | 41.1 |
| * T'$_o$ is the initial temperature on the surface of coating/panel before heat lamp radiation; $T_e$ is the temperature on the surface of coating/panel after heat lamp radiation (for more than 2 hours). $\Delta T'$ is the temperature change from T'$_e$ to T'$_o$. | | | | | |

The data in Table 8 showed that Examples 6-8 achieved a larger thermal insulation temperature difference (14.9-15.8°C) than Comparative Example 9 (14.7°C), and the requirement (≥10°C) in the national standard. Example 7 with the polymeric hollow particles and TiO$_2$ achieved the highest thermal insulation temperature difference (15.8°C) of all examples, which suggested the best thermal insulation property especially for the NIR light radiation of 700-2,500nm wavelength region.

The inventors noticed that the insulation was dominated by the whole coating - both surface and bulk property, and the reflectance property was mostly related to surface property in a coating. In order to better validate the practical value for near infrared reflectance, the measurement of surface temperature was developed for the coating which was under the radiation of a heat lamp. The temperature change for the surface of coating after and before radiation was recorded in Table 9.

The data in Table 9 showed that Examples 6-8 achieved significantly lower temperature of coating surface (<50°C) than comparative example (>50°C), and the panel without coating (>60°C) after direct radiation from heat lamp. And Example 7 with the polymeric hollow particles and TiO$_2$ achieved the lowest surface temperature (44.5°C) and lowest surface temperature change (23.9°C) of all examples, suggesting the best thermal barrier property from the surface of coating.

Above results from surface temperature and thermal insulation measurement were similar to the previous solar/infrared reflectance data, which validated the practical value for the reflective property in the energy management /saving of a coating system.

3. Dirt Pick-up Resistance

Studies in the art have discovered that dirt pick-up resistance has a significant correlation to the long-term performance and durability of coatings which reflect solar radiation. The loss of reflectance after a DPUR test for Examples 1-15 was listed in Table 10.

Table 10 Loss in Reflectance (DPUR) for Examples 1-15

| (a) Emulsion C (Tg=24°C) | | Example 1 | Example 2 | Example 3 | Comparative Example 4 | Comparative Example 5 |
|---|---|---|---|---|---|---|
| (No UV exposure) % Loss in Reflectance | Total Solar | 2.4806 | 2.9578 | 4.809 | 2.7461 | 7.2885 |
| | UV | -38.118 | -48.147 | -69.44 | -104.97 | -134.64 |
| | Visible | 5.6095 | 4.751 | 7.815 | 7.0641 | 10.196 |
| | NIR | 2.3037 | 3.0715 | 4.8569 | 2.6885 | 7.6981 |
| | | | | | | |
| (b) Emulsion A (Tg= - 40°C) | | Example 6 | Example 7 | Example 8 | Comparative Example 9 | Comparative Example 10 |
| (No UV exposure) % Loss in Reflectance | Total Solar | 11.74 | 14.69 | 15.48 | 24.113 | 22.583 |
| | UV | -49.23 | -79.53 | -81.24 | -195.15 | -169.43 |
| | Visible | 17.66 | 19.14 | 18.75 | 30.814 | 27.521 |
| | NIR | 11.19 | 14.67 | 15.69 | 24.25 | 22.932 |
| (UV exposure) % Loss in Reflectance | Total Solar | 10.46 | 12.67 | 13.26 | 20.35 | 20.36 |
| | UV | -50.88 | -81.19 | -71.93 | -133 | -135.8 |
| | Visible | 15.55 | 15.84 | 16.44 | 25.64 | 25.54 |
| | NIR | 10.09 | 12.86 | 13.4 | 20.32 | 20.46 |
| | | | | | | |
| (c) Emulsion B (Tg= - 40°C) | | Example 11 | Example 12 | Example 13 | Comparative Example 14 | Comparative Example 15 |
| (No UV exposure) % Loss in Reflectance | Total Solar | 14.12 | 14.18 | 17.89 | 24.181 | 23.676 |
| | UV | -57.66 | -89.76 | -83.8 | -245.12 | -176.79 |
| | Visible | 19.75 | 18 | 21.49 | 32.05 | 29.323 |
| | NIR | 13.747 | 14.347 | 18.07 | 24.342 | 23.977 |
| (UV exposure) % Loss in Reflectance | Total Solar | 11.59 | 14.81 | 13.45 | 23.14 | 21.23 |
| | UV | -49.25 | -72.38 | -67.76 | -173.9 | -146.6 |
| | Visible | 15.16 | 18.33 | 16.68 | 29.22 | 27.24 |
| | NIR | 11.54 | 14.91 | 13.53 | 23.24 | 21.21 |

DPUR of the coating composition were significantly improved by introducing the polymeric hollow particles in combination with $TiO_2$, especially in the elastomeric coating system.
For the system (a), all the Emulsion C based coating Examples 1-5 provided good DPUR property (2-7% loss in total solar reflectance and 5-10% loss in visible reflectance), due to the high Tg (26°C) of Emulsion C resin.

For the system (b) and (c), both Emulsion A and Emulsion B are elastomeric emulsions (Tg ≤-40°C) applied in elastomeric roof coatings (ERC). Thus the examples 6-15 in these two systems showed poor DPUR property (10-24% loss in total solar reflectance and 15-31% loss in visible reflectance).

However, in the Examples 6-8 and 11-13, better DPUR (10-18% loss in total solar reflectance and 18-21% loss in visible reflectance) was observed than that of Comparative Examples (23-24% loss in total solar reflectance and 27-32% loss in visible reflectance) in the low Tg binder systems (b) and (c). Compared with the inorganic hollow microsphere based coatings (Comparative Example 5, 10 and 15), the corresponding polymeric hollow particles based Examples provided significantly better DPUR property.

Furthermore, the DPUR property was even further enhanced by UV exposure (cross-linking) of the elastomeric emulsion (Emulsion A and Emulsion B) based coating systems.

It indicated that the dirt pick-up resistance and thus retaining of the reflectance over time were significantly improved by introducing polymeric hollow particles (combined with TiO$_2$) in the inventive formulation especially with elastomeric emulsions.

4. Tensile Performance

It is well known that normally there is a tradeoff between DPUR and elongation performance in elastomeric emulsion based coatings. What's more, there is still a tradeoff between elongation and tensile strength for the tensile performance of a formulated coating. The detailed data of tensile performance for Examples 1-15 were listed in Table 11.

Table 11 Tensile Performance for Examples 1-15

| Example No. | | Tensile Performance | |
|---|---|---|---|
| | | Percent Elongation (break) | Tensile Strength (max stress, Mpa) |
| (a) | Example 1 | 23.91 | 3 |
| | Example 2 | 53.89 | 3.9 |
| | Example 3 | 24.98 | 3.64 |
| Emulsion C | Comparative Example 4 | 311.5 | 1.66 |
| Tg24°C | Comparative Example 5 | 21.98 | 1.85 |
| (b) | Example 6 | 268.2 | 1.1 |
| | Example 7 | 217.6 | 1.08 |
| | Example 8 | 164.0 | 1.34 |
| Emulsion A | Comparative Example 9 | 493.2 | 0.76 |
| Tg-40°C | Comparative Example 10 | 85.22 | 0.53 |
| (c) | Example 11 | 520.3 | 0.84 |
| | Example 12 | 175.0 | 0.89 |
| | Example 13 | 232.5 | 0.78 |
| Emulsion B | Comparative Example 14 | 1086 | 0.49 |
| Tg-40°C | Comparative Example 15 | 203.6 | 0.42 |

Tensile performance of the coating composition was significantly improved by introducing the polymeric hollow particles, especially in the elastomeric coating system.

As shown in Table 11, the Comparative Examples 4, 9, and 14 (only TiO$_2$) had the highest elongation and relatively low tensile strength in each resin systems. Instead, the Comparative Examples 5, 10, and 15 (inorganic hollow microsphere plus TiO$_2$) had the relatively low elongation and tensile strength in each resin systems. Compared with the Comparative Examples, the Examples provided relatively higher elongation and better tensile strength in each resin system especially for the elastomeric emulsion based coatings, which provided a solution to avoid the tradeoff between both tensile properties.

**Claims**

1. An infrared reflective coating composition comprising, by weight percentage based on the total dry weight of the composition, 0.1% to 50% polymeric hollow particles, from 0.1% to 70% pigment particles and from 20% to 80% at least one polymeric binder having a Tg, measured by differential scanning calorimetry, from -60°C to 0°C, wherein the volume average particle size of the polymeric hollow particles is from 0.38 to 1.6 μm; and wherein the volume average particle size distribution of the polymeric hollow particles is such that 90% of particle lies within ±10% of the volume average particle size.

2. The coating composition of claim 1, wherein the polymeric hollow particles are (co)polymers containing, as (co)polymerized unit, at least 50 wt% styrenic monomer.

3. The coating composition of claim 2, wherein the polymeric hollow particles are (co)polymers containing, as (co)polymerized unit, at least 70 wt% styrenic monomer.

4. The coating composition of claim 1, wherein the volume average particle size of the polymeric hollow particles is from 0.38 to 1.3 μm.

5. The coating composition of claim 4, wherein the volume average particle size of the polymeric hollow particles is from around 1.0 to 1.3 μm.

6. The coating composition of claim 1, wherein the polymeric binder has a measured Tg of from -60 to -40°C.

7. The coating composition of claim 1, wherein the content of the polymeric hollow particles is from 5wt% to 30wt%, based on the total dry weight of the composition.

8. The coating composition of claim 1, wherein the pigment particles are selected from the group consisting of titanium dioxide, zinc oxide, zinc sulfide, Kaolin and their mixtures thereof.

9. A coated material comprising at least one coating film derived from the coating composition of claim 1.

10. An infrared reflective multilayer coating film derived from the coating composition of claim 1, wherein the coating composition is applied as a base coating, a top coating, or as both base coating and top coating of the multilayer coating film.

**Patentansprüche**

1. Eine Infrarot reflektierende Beschichtungszusammensetzung, beinhaltend in Gewichtsprozent, bezogen auf das Gesamttrockengewicht der Zusammensetzung, 0,1 % bis 50 % hohle Polymerteilchen, von 0,1 % bis 70 % Pigmentteilchen und von 20 % bis 80 % mindestens einen Polymerbinder mit einer Tg, gemessen mittels Differentialrasterkalorimetrie, von -60 °C bis 0 °C, wobei die volumenmäßige mittlere Teilchengröße der hohlen Polymerteilchen von 0,38 bis 1,6 μm reicht; und wobei die Verteilung der volumenmäßigen mittleren Teilchengröße der hohlen Polymerteilchen derart ist, dass 90 % der Teilchen innerhalb ± 10 % der volumenmäßigen mittleren Teilchengröße liegen.

2. Beschichtungszusammensetzung gemäß Anspruch 1, wobei die hohlen Polymerteilchen (Co)Polymere sind, die als (co)polymerisierte Einheit mindestens 50 Gew.-% Styrolmonomer enthalten.

3. Beschichtungszusammensetzung gemäß Anspruch 2, wobei die hohlen Polymerteilchen (Co)Polymere sind, die als (co)polymerisierte Einheit mindestens 70 Gew.-% Styrolmonomer enthalten.

4. Beschichtungszusammensetzung gemäß Anspruch 1, wobei die volumenmäßige mittlere Teilchengröße der hohlen Polymerteilchen von 0,38 bis 1,3 μm beträgt.

5. Beschichtungszusammensetzung gemäß Anspruch 4, wobei die volumenmäßige mittlere Teilchengröße der hohlen Polymerteilchen von etwa 1,0 bis 1,3 μm beträgt.

6. Beschichtungszusammensetzung gemäß Anspruch 1, wobei der Polymerbinder eine gemessene Tg von -60 bis -40 °C aufweist.

7. Beschichtungszusammensetzung gemäß Anspruch 1, wobei der Gehalt der hohlen Polymerteilchen, bezogen auf das Gesamttrockengewicht der Zusammensetzung, von 5 Gew.-% bis 30 Gew.-% beträgt.

8. Beschichtungszusammensetzung gemäß Anspruch 1, wobei die Pigmentteilchen aus der Gruppe ausgewählt sind, die aus Titandioxid, Zinkoxid, Zinksulfid, Kaolin und ihren Mischungen davon besteht.

9. Ein beschichtetes Material, beinhaltend mindestens einen Beschichtungsfilm, der von der Beschichtungszusammensetzung gemäß Anspruch 1 abgeleitet ist.

10. Ein Infrarot reflektierender Mehrschichtbeschichtungsfilm, der von der Beschichtungszusammensetzung gemäß Anspruch 1 abgeleitet ist, wobei die Beschichtungszusammensetzung als eine Basisbeschichtung, eine Deckbeschichtung oder als sowohl Basisbeschichtung und Deckbeschichtung des Mehrschichtbeschichtungsfilms aufgebracht wird.

## Revendications

1. Une composition de revêtement réfléchissant dans l'infrarouge comprenant, en pourcentage en poids rapporté au poids sec total de la composition, 0,1 % à 50 % de particules creuses polymériques, de 0,1 % à 70 % de particules de pigment et de 20 % à 80 % d'au moins un liant polymérique ayant une Tg, mesurée par calorimétrie différentielle à balayage, allant de -60 °C à 0 °C, dans laquelle la taille de particule moyenne volumique des particules creuses polymériques va de 0,38 à 1,6 μm ; et dans laquelle la distribution de tailles de particules moyennes volumiques des particules creuses polymériques est telle que 90 % des particules se situent dans les ± 10 % de la taille de particule moyenne volumique.

2. La composition de revêtement de la revendication 1, dans laquelle les particules creuses polymériques sont des (co)polymères contenant, comme unité (co)polymérisée, au moins 50 % en poids de monomère styrénique.

3. La composition de revêtement de la revendication 2, dans laquelle les particules creuses polymériques sont des (co)polymères contenant, comme unité (co)polymérisée, au moins 70 % en poids de monomère styrénique.

4. La composition de revêtement de la revendication 1, dans laquelle la taille de particule moyenne volumique des particules creuses polymériques va de 0,38 à 1,3 μm.

5. La composition de revêtement de la revendication 4, dans laquelle la taille de particule moyenne volumique des particules creuses polymériques va d'environ 1,0 à 1,3 μm.

6. La composition de revêtement de la revendication 1, dans laquelle le liant polymérique a une Tg mesurée allant de -60 à -40 °C.

7. La composition de revêtement de la revendication 1, dans laquelle la teneur en particules creuses polymériques va de 5 % en poids à 30 % en poids, rapporté au poids sec total de la composition.

8. La composition de revêtement de la revendication 1, dans laquelle les particules de pigment sont sélectionnées dans le groupe constitué de dioxyde de titane, d'oxyde de zinc, de sulfure de zinc, de kaolin et de leurs mélanges.

9. Un matériau revêtu comprenant au moins un film de revêtement dérivé de la composition de revêtement de la revendication 1.

10. Un film de revêtement multicouche réfléchissant dans l'infrarouge dérivé de la composition de revêtement de la revendication 1, dans lequel la composition de revêtement est appliquée comme un revêtement de base, un revêtement de finition, ou à la fois comme revêtement de base et revêtement de finition du film de revêtement multicouche.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 10010538 A, Hugo
- US 6194484 B, Hugo
- WO 2010091416 A, Valspar
- EP 2182033 A, Akzo
- WO 2008048765 A
- CN 101665658, Peng Yi
- US 20050126441 A
- US 6787585 B
- US 20040137160 A
- US 20070218291 A, Chiou
- US 20030236374 A
- US 4325856 A
- US 4654397 A
- US 4814373 A

**Non-patent literature cited in the description**

- **T.G. FOX.** *Bull. Am. Physics Soc.,* 1956, vol. 1 (3), 123
- Polymer Handbook. Interscience Publishers
- *ASTM D 2370 Test Method for Tensile Properties of Organic Coatings,* December 1998
- Architectural reflective thermal insulation coatings. *China National Standard,* 2008